Europäisches Patentamt

European Patent Office

Office européen des brevets

(19)

(11) **EP 1 196 219 B1**

(12) **EUROPEAN PATENT SPECIFICATION**

(45) Date of publication and mention
of the grant of the patent:
**26.01.2005 Bulletin 2005/04**

(51) Int Cl.7: **A62D 3/00**

(86) International application number:
**PCT/IB1999/001975**

(21) Application number: **99974185.3**

(22) Date of filing: **15.11.1999**

(87) International publication number:
**WO 2001/036050 (25.05.2001 Gazette 2001/21)**

(54) **METHODS FOR NEUTRALIZING/DETOXIFYING HAZARDOUS COMPOUNDS AND STABLE SOLIDIFYING METHOD**

VERFAHREN ZUR NEUTRALISIERUNG UND ENTGIFTUNG VON GEFÄHRLICHEN STOFFEN UND STABILE VERFESTIGUNG-METHODE

PROCEDE DE NEUTRALISATION/DETOXICATION DE COMPOSES DANGEREUX ET PROCEDE DE SOLIDIFICATION STABLE

(84) Designated Contracting States:
**AT BE CH CY DE DK ES FI FR GB GR IE IT LI LU MC NL PT SE**

(43) Date of publication of application:
**17.04.2002 Bulletin 2002/16**

(73) Proprietors:
• **Akae, Yukoh**
  **Kobe-shi, Hyogo-ken, 655-0044 (JP)**
• **Kote, Kazuo**
  **Yokohama-shi, Kanagawa-ken, 241-0011 (JP)**

(72) Inventors:
• **Akae, Yukoh**
  **Kobe-shi, Hyogo-ken, 655-0044 (JP)**

• **Kote, Kazuo**
  **Yokohama-shi, Kanagawa-ken, 241-0011 (JP)**

(74) Representative: **Viering, Jentschura & Partner**
**Steinsdorfstrasse 6**
**80538 München (DE)**

(56) References cited:
**EP-A- 0 526 997**

• **PATENT ABSTRACTS OF JAPAN vol. 006, no. 118 (C-111), 2 July 1982 (1982-07-02) & JP 57 045385 A (SATO SHINOBU;OTHERS: 02), 15 March 1982 (1982-03-15)**

**Description**

The present invention relates to a method for treating a sample of environmental pollutants according to claim 1.

Methods for detoxifying and fixing environmental pollutants (compounds known as a source of environmental pollution) such as heavy metal compounds (Cu, Pb, Cr, Zn, Co), semi-metal compounds (P, As, Sb, Bi) and halogenated compounds.

According to the current method for treating environmental pollution, the processing of pollutants can be completed by heat treatment at high temperatures to make heavy metal oxides and semi-metal oxides; yet no method is known to stably fix these oxides. Although some commentators say that those compounds are not environmentally hazardous when converted into oxides, it is clear that the compounds are not sufficiently treated for pollution just by being oxidized. Specific environmental pollutants such as heavy metal, semi-metal, and halogenated compounds are thus required to be completely neutralized/detoxified.

In order to deal with environmental pollution as set forth hereinabove, the following is required: (1) safe handling and treatment of potentially hazardous gaseous elements (halogen group) that are added to heavy metals and semi-metals; (2) safe fixing of heavy metals and semi-metals as well as the (organic) elements added to them; (3) safe handling and thermal treatment of secondary pollution in soil due to the dumping of heavy metals and semi-metals; and safe handling and secondary treatment of polluted colloidal substances primarily semi-metal compounds in polluted EP-A- 0526 997 discloses at least a portion of any iron, copper, nickel and chromium ions are removed from an aqueous liquid in which they are in solution as chelates of an alkylenepolyamine polyacetic acid or salt by (a) adjusting the pH of the liquid to above about 10; (b) adding sufficient sodium sulfide to react with at least a portion of the copper ions; (c) separating precipitated iron and copper compounds; (d) adding nitric acid to adjust the pH to the range of about 6 to 8; (e) adding sufficient sodium nitrite to the liquid to react with at least a portion of the nickel and chromium present; (f) heating the liquid to above about 575°F (302°C) for at least about 15 minutes to facilitate precipitation of nickel and chromium; and (g) separating precipitated solids to leave a non-hazardous filtrate.

Patent Abstracts of Japan vol 6. N°118 (C-111), 2 July 1982 & JP 57 045385 A (Sato Shinobu; others:02) 15 March 1982 relates to purify various kinds of waste water easily and efficiently by applying electric shock to waste sewage to allow the heavy metal ions contained therein to crystallize and to remove them, thence allowing other impurities to crystallize. Static electricity of about 500,OOOW 1,000,000V is intermittently irradiated to waste water of plating plants or the like to allow the ionized heavy metals in the sewage to crystallize. Thence, metallic bars for recovering heavy metals are charged to stuck with the heavy metals, after which the heavy metal recovery bar are removed. Then, the 1st crystallizing chemical liquid consisting of deolite, pearlite, ferrous iron, ferric iron, aluminum sulfate, the 2nd crystallizing chemical liquid consisting of caustic soda, sodium nitrite, sodium phoshate, and the 3rd crystallizing chemical liquid of calcium carbonate are successively charged, to allow the impurities other than heavy metals to crystallize, thereby removing theses impurities. By this method, various kinds of sewage waste water are purified with good efficiency.

Hazardous compounds known for environmental pollution such as heavy metal, semi-metal, and halogenated compounds, are in a state of secondary pollution in most cases. They exist in (1) colloidal sludge; (2) soil containing spread ash from an incinerator, especially in ash incompletely combusted; and (3) polluted soil and water that are dumped untreated. Therefore it is desired to provide a procedure for removing hazardous heavy metal and semi-metal compounds existing in the forms noted hereinabove.

The method for treating a sample of environmental pollutants is defined in claim 1.

The present invention solves the problems noted hereinabove by chemically treating the compounds by selecting specific solvents and using them, treating the sample at room temperature or below (30°C or lower); separating of fatty acids mixed with heavy metal and semi-metal compounds as well as the separation of organic substances (including halogenated compounds) added to heavy metals and semi-metals; forming diazo salt by using sodium nitrite and sodium 1-naphthylamine-4-sulfonate in combination from specific solvents, thereby forming alkylsulfonic acid salt and alkyl sulfonium salt in the presence of sulfonic acid salt so as to fix organic substances mixed in the sample; absorbing and polymerizing the hydrocarbon group, which is generated in the sample during treatment, through the action of electron exchange ions of hydroxyl group, where hydroxyl and sulfonyl groups are formed through substitution by using 2-naphthol-4-sulfonic acid and calcium oxide in combination (solvent 3) out of the specific solvents (Formula 5); and to form chlorine adsorbent through substitution with calcium oxide in the presence of sodium sulfonyl group (Formulas 5 and 10).

New reactions such as substitution, metal exchange; formation of various complex (and coordination) compounds occurred, in the process of treatment with the solvents employed, between the heavy metal compounds (Pb, Cr, Zn, Pe, etc.) and semi-metal compounds (P, As, Sb, Bi, etc.) contained in the sample; the focus being on the fixation and stabilization of semi-metal compounds. The major reason as stated hereinabove is to prevent these semi-metal compounds from becoming the source of aerial pollution after evaporation or when powdered and thus high-temperature thermal treatment is avoided.

As the final step of treatment, the hazardous substances are fixed and stabilized by absorbing electron donors and electron receptors that are formed in the previous step with graphite interlayer compounds (stirring time is approximately one hour and sitting time is approximately one hour. Soil-like crystal is employed).

In order to provide a simplified explanation for the procedure in its order, heavy metal and semi-metal compounds in the hazardous pollutants (hereinafter referred as the sample) existing in various forms are respectively referred to as:

Sample (A) for the sample related to the treatment of heavy metal hazardous compounds; and
Sample (B) for the sample related to the treatment of semi-metal hazardous compounds. Sewage sludge, 3 liters in a colloidal form, was chosen for the embodiment of sample (A). Incineration of the incinerator ash, water content about 50%, was chosen for the embodiment of sample (B).

In Sample (A), the heavy metals contained in the sample, cadmium chloride, alkylated mercury, lead monoxide, and the like, are the subjects. Others are fatty acid ester and common soil and water content is about 120%.

In sample (B), the semi-metal compounds contained in the sample are arsenic oxide, arsenic sulfide, antimony oxide, antimony chloride, bismuth chloride, and the like. Otherwise the fatty acid group was contained as a component of the solution.

Originally saturated and unsaturated fatty acids are mixed in the samples (A) and (B). In addition, both heavy metal and semi-metal compounds were contained in the samples (A) and (B), however, as stated hereinabove, for ease of explanation in the embodiment, the treatment of heavy metals in sample (A) and the treatment of semi-metals in sample (B) will be the primary focus of the following discussion. Treatment followed a three-step procedure. At the first and second step, the samples (A) and (B) are treated separately, but they are treated by the same method at the third step. (Contrary to predictions, it was found as a result that the same agents and procedure for chemical treatment were applicable to heavy metals and semi-metals and that the treatment can be performed at room temperature or below.) The following are the step-by-step explanations for the treatment procedure.

Treatment of Sample (A) - The first step: The agents to be used are (Solvent 1) Sodium nitrite and (Solvent 2) Sodium 1-naphthylamine-4-sulfonate. Solvents 1 and 2 are added one after another to sample (A) and stirred for approximately five minutes. The ratio of adding (Solvents 1 and 2) is one-to-two (1:2), but the ratio itself has no significant meaning. However, it does have an important meaning (discussed hereinafter) in relation to the fixation of semi-metals (phosphorus compound, arsenic compound, etc.) that belongs to Class B of sample (A).

At this step, the purpose is to form alkaline substances through dehydration (Formula 1) of (Solvent 1) and (Solvent 2). Reactants and nitrous group will carry out substitution (Formula 2) with unsaturated fatty acids and fatty acid ester contained in sample (A), and then, as shown in (Formula 3), to proceed decomposition (condensation) of organic acids (fatty acids) contained in sample (A). In other words, the implication of the decomposition of fatty acids is to promote effective fixation through substitution and exchange reaction of heavy metal compounds that follow thereafter.

Secondly, aromatic primary amine is added. The reaction occurring at this point is diazo reaction (Formula 4), and furthermore, azo compounds will be formed through diazotate reaction (formula 6) and coupling reaction (Formula 7). The same will lead to the formation of hydrazine (N2H4).

In addition, the goals aimed at the first step are the separation and crystallization (condensation) of the metal group, fatty acid group, other phenol group, and organic substances contained in the sample (A). This means the dechlorination with diazonio group (-N2), and the formation of insoluble crystal compounds hydrazine ($RRC=NNH_2$) by applying the action of hydrazine to organic compounds having aldehyde and ketone group.

In other words, the nature of heavy metals detected in the sample (A) was the mixture of cadmium chloride, chromate and dichormate salt, cupric dioxide, alkylated mercury, and the like. Moreover, saturated fatty acid ester mixed in the sample (A) retains the viscosity of the sample (A) and is the cause for inhibiting the progress of metal exchange reaction. Therefore, in order to dilute the viscosity, (Solvents 1 and 2) were added and stirred at first. The major part of a series of reactions (Formula 4) at this point is diazo reaction and various diazonium salts were formed. Other series of reactions (Formulae 1 through 7) are shown for reference. Furthermore, as shown in (Formula 9), (Solvent 1) is also provided for dechlorination.

After stirring for five minutes and sitting for about ten minutes, the next step follows.

The second step: Agents to be used are as follows: (Solvent 3) 2-naphthol-4-sulfonic acid, or (Solvent 4); (Solvent 4) 2-naphthol-7-sulfonic acid; (Solvent 5) Calcium oxide.

The treatment purpose at this step is to combine with heavy metals contained in the sample by forming complex compounds of diazo salt, which is formed at the first step, and (Solvent 3) was employed in the embodiment. In addition, (Solvent 6) is specified as the dechlorinating agent for metal oxides and halogen absorbent. Next, with the presence of the sulfonic group as the functional group formed in the solution upon adding (Solvent 3), it was aimed to form a complex compound (sulfonic salt) of various transition metals (lead, copper, iron, zinc, chromium, etc.) that is contained in the sample. In other words, the existence of sulfonic group (-SO2(OH)) is to carry out aromatic electronphilic substitution.

In such a manner, heavy metals that are contained in sample (A) are isolated from other organic substances existing simultaneously and dechlorinated. As to other metals, partially the formation of sulfide complex (copper, lead, iron, etc.) and the binding of heavy metals (chromium-ammonium, nickel-cyanogen, etc.) from the formation of coordination compounds will take place. Namely, that means ammonium and ethylene group will form coordination bonding will be discussed hereinbelow with respect to sample (B).

Therefore, for example, organic mercury, mercury ions bonded with hydrocarbon group exist in the solution. Insertion of sulfonyl group will lead to the formation and fixation of mercury O-alkylsulfoxylate (RO-S(=O)-Hg)(Formula 11). Heavy metal ions individually, for instance, a trivalent metal ion, will be reduced to divalent metal ions as shown in (Formula 12).

Thereafter, beta-naphthol sulfonic acid, (Solvent 3), acts as the adsorbent of hydrocarbon group (monovalent alkyl group). The reason this solvent was selected is because its toxicity is lower than alpha-naphthol. The phenolic sulfonyl group prevents the generation of hydrocarbon gas during the process of stable fixation of heavy metals at the first and second steps. After stirring the mixture is left in place for approximately 60 minutes. This time period may vary depending on the volume of treatment.

Treatment of the Sample (B). Consecutively, the treatment procedure of semi-metal hazardous compounds is explained by using sample (B).

The semi-metal noted herein is the 15th family in the periodical table including phosphorus, arsenic, panadium, antimony, and the like.

The agents to be used at the first step are: (Solvent 1) Sodium nitrite; (Solvent 2) Sodium 1-naphthylamine-4-sulfonate.

The hazardous compounds that belong to the 15th family in the periodical table and were detected are arsenic trioxide, antimony tetroxide, [phosphorus-9-uolfuramic/Walframic acid] , and phosphorus compounds with copper and lead.

The following is an explanation of the stabilization and fixation of semi-metal compounds (P, Ax, Sb, Bi, etc.) in the sample (B), following each step. The first step (Sample B): Purpose of this step is same as that in sample (A), to turn various fatty acid esters into alcohol and crystal (condensation) through dehydration. The process of formation is what is stated using (Formula 1), (Formula 2), (Formula 3), and (Formula 4). The agents and stirring time to be employed are the same as for sample (A).

The second step (Sample B): - Agents to be Used: (Solvent 3) 2-naphthol-4-sulfonic acid or (Solvent 4); (Solvent 6) Calcium oxide. The same procedure is followed as for the sample (A). As to the agents to be used, all the same agents in the same volume are to be used.

The most important issue is to carry out dechlorination, isolation, and stable fixation of arsenic and antimony oxides. In other words, the reaction of (Formula 5) occurred due to sulfonic group in the solution of (Solvent 3) and hydroxyl sodium group formed at the first step of sample (B), and then, arsenic trioxide will be fixed, following (Formula 11).

The formation of sodium hydrogen sulfonate in (Formula 5) acts as the dechlorinating agent. An example of reaction formula is shown in (Formula 13). In addition, sulfonic group existing in the solution of (Solvent 3) has one hydronium group. The phenolic hydroquinone acts as an electron exchanger to reversibly oxidize or reduce ions. Based on this action, when putting in (Solvent 2) at the first step, the formation of azo compounds by coupling reaction (Formula 7) after turning aromatic primary amine into diazo compounds indicates the formation of hydrazone. Also, aldehyde and ketone of alkylated compounds are isolated and some crystal bodies such as phenyl hydrazone ($RR^*$=C=NNC6H5) are formed.

On the other hand, alkaline-earth metal (Ca, Sr, Ba, etc.) sulfide and semi-metal (As, P, Sb, Bi) sulfide will be sulfonated in the presence of sulfonic group of sulfonic acid, and both sulfonic salts will bind together as a complex compound (double salt).

The solvents to be used at the second step include (Solvent 3) to (Solvent 6) and its combination. In other words, the combination of (Solvent 3) to (Solvent 6) as well as (Solvent 4) to (Solvent 5) are to be used. In the embodiment, the combination of (Solvent 3) to (Solvent 6) was employed.

The major purpose at the second step is to carry out delinquescential crystallization of various alkyl halogen and sulfuric alkyl groups in the presence of phenolic hydroquinone and phenolic sulfonyl group and to adsorb and fix ionized halogen group (chlorine) and alkyl group onto calcium hydrogensulfite. Of course, reaction formulae used for formation at the first step were repeatedly performed, and as another purpose, the elevation of the temperature of the sample due to exothermal reaction of calcium oxide is utilized for the condensation of alkylsulfonic acid salt.

In such a manner, to determine the volume of various solvents to be used in the first and second step are, as stated in the treatment of samples (A) and (B), it is necessary to know quantitative information of heavy metal and semi-metal halogenated compounds and sulfide contained in the substance subject to treatment, or the sample candidate, and the volume to be used will be determined as a result. In other words, the chemical and physical properties of the substances to be treated are not even. After completing the above treatment, sitting for approximately 60 minutes is allowed to promote separation between solution and solid parts.

The third step: This step is common to samples (A) and (B) . (Graphite treatment) . Agent to be used - (Solvent 7) Graphite (in a form of soil grain) . (Solvent 7) is added to the samples (A) and (B) and mixed and stirred. The purpose is to form graphite interlayer compound. Between the layers, the following are inserted. Electron donors such as alkaline metals, alkaline-earth metals, transition metals, etc.; and electron receptors such as halogen, halogenated metal compounds, metal oxide, Lewis acid, etc. (A variety of inter-layer reactions will be performed).

The above happens because graphite has the characteristic of forming inter-layer compounds where reactants are inserted between layers through electron transfer as reacted with potassium, sodium, halogen, sulfuric sulfide, oxide and the like. The major reason to mix graphite is as stated hereinabove.

Graphite used at this step (in a form of soil grain) was 8 wt% to the sample (A) and 6 wt% to the sample (8). Since the amount of chloride in the sample (A) is large, in order to prevent it from spreading into the air and to maintain safety, exhaust gas generated inside the treatment facility was directed by forced ventilation into the reactor/furnace that contains (Solvent 3) solution and is located in the exterior chamber of the treatment apparatus

Then, stirring time at tne third step after mixing (Solvent 7) is about one hour for both samples (A) and (B). Also, the time for sitting and reaction is one hour, respectively. As a result, both samples were clearly separated into solid phase and transparent liquid phase, and were separated upon confirming the safety of both liquid components. Consequently, environmental pollution was found in the separated components.

The present invention thus neutralized/detoxified and fixed heavy metal (Fe, Cu, An, Cr, Pb, etc.) and semi-metal (P, As, Sb, Bi, etc.) compounds, halogen and halogenated compounds, sulfide, and the like in the course of the continuous treatment process. Prior to the treatment process, no external heat was introduced and all reactions were conducted at room temperature or below providing economy and safety. Since heavy metal, semi-metal, halogenated, and sulfide compounds, etc., that are fixed by the final treatment with graphite are graphite inter-layer compounds, the physical properties of graphite such as thermal insulation and friction resistance at a high temperature can be retained. It was found safe for various compounds inserted between the layers of graphite, such as heavy metal, semi-metal, and halogenated compounds, since they were not dissipated into water.

The fixation of hazardous substances with safety has thus been provided which in turn provides an effective treatment for environmental pollution.

It is possible to neutralize/detoxify the water and sludge known for environmental pollution and make them environmentally safe. For example, the neutralization/detoxification of sewage treatment plants, polluted water and sludge from animal farms can be accomplished.

It is possible to provide treatment for environmentally safe fixation of hazardous substances disposed from mining fields and chemical plants, etc.; and the treatment for environmentally safe fixations of polluted soil surrounding these facilities.

It is possible to provide treatment for environmentally safe fixation of hazardous substances contained in incinerated ash and debris from incineration fields; and treatment for neutralization/detoxification of soil surrounding the incineration fields polluted with dioxine and the like originated from soot and smoke.

It is also possible to have a treatment for neutralization/detoxification of hazardous substances in obsolete chemical weapons and to construct cleaning facilities that are differentiated by type of business in order to prevent expansion of pollution to a wide range of area.

While the invention has been described with reference to its preferred embodiments, it will be understood by those skilled in the art that various changes may be made and equivalents may be substituted for elements thereof without departing from the true spirit and scope of the invention. In addition, many modifications may be made to adapt a particular situation or material to the teachings of the invention without departing from its essential teachings.

APPENDIX: FORMULAS

$$(1)\ N_aONO + H_2O \rightarrow N_aOH + HONO$$

$$(2)\ RCOOR' + HONO + H_2O \rightarrow RCOOH + R'OH + HNO_2$$

$$(3)\ RCOOH + (SO_3Na) \rightarrow ROC(SO_3Na) + (OH)^-$$
$$ROC(SO_3Na) + OH \rightarrow ROC(SO_3H) + Na(OH)$$

$$(4)\ NH_2Ar \cdot SO_3Na + HONO \rightarrow Ar \cdot Na^+ \cdot (SO_3Na)$$

$$(5)\ \cdot SO_3Na^- + H_2O \rightarrow \cdot HSO_3^- + Na(OH)$$

$$(6)\ (HSO_3)ArNH_2 + HONO \rightarrow [ArN^+ \equiv N] + OH + H_2O$$

$$(7)\ [ArN_2] + (SO_3H) + NaOH \rightarrow Na^+ [Ar - N - O^-]$$

(8) $[ArN^+ \equiv N] + [Ar'NH_2) \rightarrow [ArN_2NHAr']$

(9) $Ar \cdot N_2([ArN^1 \equiv N] + (SO_3Na) \rightarrow ArN \equiv N$

$(SO_3Na)$

(10) $Na(OH) + CL^-aq \rightarrow NaCL$

(11) $As_2O_3 + 6NaOH \rightarrow 2Na_5A_9O_3 + 6(OH)^-$

$2Na_5A_sO_3 + 3Ca(OH)_2 \rightarrow Ca_3(A_sO_3)_2 +$

$6Na(OH)$

(12) $R \cdot Hg + (SO_2)^-aq \rightarrow [RO-S(-O_2) - Hg]'$

(13) $CdCL_3 + 2NaHSO_3 \rightarrow Cd(HSO_3)_2 + 2NaCL$

(14) $2Cr^{6+} + (SO_3)aq \rightarrow 2Cr^5 + (SO_3)^{2-} + 4H^+$

(15) $Ca(SO_3Na)_2 + 2RCL \rightarrow CaCL_2 + 2R$

$(SO_3Na)$

(16) $Ar(OH) + (C_3H_7)^- \rightarrow Ar(OH) \cdot CH_3 \cdot CH_2 \cdot$

$CH_2^-Ar(OH) \cdot (CH_3)_2 \cdot CH^-$

(17) $CaO + H_2O \rightarrow Ca(OH)_2 + 63 \cdot 6Kj/mol$

$Ca(OH)_2 + 2(HSO_3)^-aq \rightarrow Ca(HSO_3) +$

$2(OH)^-aq$

(18) $Ca(SO_3H)_2 + 2R'CL \rightarrow CaCL_2 + 2R'(SO_3H)$

(19) $CuCL_2 + Ca(SO_3H)_2 \rightarrow CaCL_2 + Cu$

$(SO_3H)_2$

(20) $2SbCL_3 + 3Ca(SO_3H)_2 \rightarrow 3CaCL_2 + 2Sb$

$(SO_3H)_3$

(21) $2Ca(HSO_3)_2aq + As_2O_5 \rightarrow Ca_2As_2O_5 + 2$

$(HSO_3)^- aq$

(22) $P_2O_5 \cdot 18WO_3 + (SO_3Na) \rightarrow 1(SO_3Na) \cdot mP_2$

$O_5 \cdot nWO_3$

**Claims**

1. A method for treating a sample of environmental pollutants such as hazardous heavy metals, and semi metals, comprising the steps of :

   - treating the sample at room temperature or below,
   - forming alkaline substances through **dehydration** of sodium nitrite and sodium 1-naphthylamine-4-sulfonate,
   - adding an aromatic primary amine
   - forming diazo salt by using sodium nitrite and sodium 1-naphthylamine-4-sulfonate in combination from specific agents thereby forming alkylsulfonic acid salt and alkyl sulfonium salt in the presence of sulfonic acid salt in order to separate of fatty acids mixed with heavy metal compounds in the sample as well as organic substances added to heavy metals,
   - forming complex compounds with heavy metals and the diazo salts,
   - treating with **graphite** for forming graphite interlayer compounds by absorbing electron donors and electron receptors.

2. The method of claim 1 wherein said specific agents are sodium nitrite, sodium 1-naphthylamine-4-sulfonate, 2-naphthol-4-sulfonic acid, naphthalene derivatives.

**Patentansprüche**

1. Verfahren für die Behandlung einer Probe von Umweltschadstoffen, wie zum Beispiel Schwermetallen und Halbmetallen, das die Schritte umfasst:

   - Behandeln der Probe bei Raumtemperatur oder darunter,
   - Bilden von basischen Substanzen durch Dehydratation von Natriumnitrit und Natrium-1-naphthylamine-4-sulfonat,
   - Zugeben eines aromatischen primären Amins,
   - Bilden von Diazosalz durch Verwendung von Natriumnitrit und Natrium-1-naphthylamine-4-sulfonat in Kombination mit spezifischen Agenzien, wodurch Alkansulfonsäuresalz und Alkansulfoniumsalz in Gegenwart von Sulfonsäuresalz gebildet werden, um Fettsäuren, die mit Schwermetallverbindungen in der Probe als auch mit zu Schwermetallen zugegebenen organischen Substanzen vermengt sind, abzutrennen,

- Bilden von Komplexverbindungen mit Schwermetallen und dem Diazosalz,
- Behandeln mit Graphit für die Bildung von Graphitzwischenschichtverbindungen durch Absorbieren von Elektronendonatoren und Elektronenrezeptoren.

2. Verfahren nach Anspruch 1, wobei die spezifischen Agenzien Natriumnitrit, Natrium-1-naphthylamin-4-sulfonat, 2-Naphthol-4-sulfonsäure, Naphthalenderivate sind.

**Revendications**

1. Procédé de traitement d'un échantillon de polluants de l'environnement tels que des métaux lourds et des semi-métaux dangereux, comprenant les étapes de :

- traitement de l'échantillon à une température ambiante ou inférieure,
- formation de substances alcalines à partir de la déshydratation de nitrite de sodium et de 1-naphthylamine-4-sulfonate de sodium,
- addition d'une amine aromatique primaire,
- formation d'un sel diazo en utilisant du nitrite de sodium et du 1-naphthylamine-4-sulfonate de sodium en combinaison à partir d'agents spécifiques, ce par quoi on forme un sel d'acide alkylsulfonique et un sel d'alkylsulfonium en présence d'un sel d'acide sulfonique afin de séparer les acides gras mélangés avec des composés de métaux lourds dans l'échantillon, ainsi que des substances organiques ajoutées aux métaux lourds,
- formation de composés complexes avec des métaux lourds et les sels diazo,
- traitement avec le graphite pour former des composés à base d'intercouches de graphite en absorbant des donneurs d'électrons et des accepteurs d'électrons.

2. Procédé selon la revendication 1 dans lequel lesdits agents spécifiques sont le nitrite de sodium, le 1-naphthylamine-4-sulfonate de sodium, l'acide de 1-naphthol-4-sulfonique et des dérivés de naphtalène.